# EUROPEAN PATENT SPECIFICATION

(11) **EP 4 540 887 B1**
(45) Date of publication and mention of the grant of the patent: **18.11.2026**
(21) Application number: 22734912.3
(22) Date of filing: 15.06.2022
(51) Int. Cl.: H01M 50/105

(54) **ELECTROCHEMICAL DEVICE**
ELEKTROCHEMISCHE VORRICHTUNG
DISPOSITIF ELECTROCHIMIQUE

(43) Date of publication of application: 23.04.2025
(73) Proprietor: ABB SCHWEIZ AG, 5400 Baden (CH)
(72) Inventor: SCHULER, Gabriel, 6415 Arth (CH); HE, Minglong, 4310 Rheinfelden (CH); TROENDLE, Pirmin, 79761 Waldshut-Tiengen (DE)
(74) Representative: Kransell & Wennborg KB
(86) International application number: PCT/EP2022/066283
(87) International publication number: WO 2023/241789

(56) References cited:
- EP-B1- 1 921 691
- WO-A1-2022/076283
- US-A1- 2017 069 940

## Description

### FIELD OF INVENTION

The present invention relates to an electrochemical device.

### BACKGROUND

Due to the increased use of renewable energy sources, electrochemical devices, i.e. devices using electrodes and/or membranes in electrolyte that deliver and/or store electrical energy such as batteries, have become of interest in a wide range or areas. For this reason sheets of electrochemical material such as electrode sheets and separator sheets are placed in an enclosure or a casing. Consequently, also the way that such enclosures are formed is of interest.

Such an enclosure is today normally made of flexible or rigid pieces in order to prevent the interior of the enclosure from moisture and the leakage of electrolyte. Common cell formats comprise pouch enclosures, rigid cylindrical and prismatic cans. Rigid cell enclosures have the advantage of easier integration in modules or packs as well as having higher safety levels to withstand internal gassing, swelling as well as external mechanical influences. Additional safety of rigid structures comes with higher manufacturing complexity and cost.

In addition, many cell chemistries require compression of cells when assembled in modules or packs. This is an inaccurate method and results in complex and failure prone systems resulting in low or unforeseeable ageing behaviour of entire modules or of single cells in modules, due to inaccurate compression conditions.

However, it is of interest to improve on the cell enclosures through providing rigid or semi rigid enclosures that can be easily manufactured together with the obtaining of enhanced cell lifetimes.

One type of enclosure is known through US 9831474, where a battery cell including an electrode assembly of a cathode/separator/anode structure is impregnated with an electrolyte and mounted in a battery case made of aluminum or an aluminum alloy. Furthermore, an alumina coating layer is applied to at least a portion of an outer surface of the battery case by anodizing. WO2022 076283 discloses a pouch cell, the first portion of the pouch housing is attached to the second portion of the housing by at least one of welding, ultrasonic welding, adhesives, crimping, heat sealing, or bonding.

It is of interest to improve on the way that electrochemical devices, such as stacks of sheets with electrochemical device forming material are realized, where such stacks may be used in battery cells and/or fuel cells.

### SUMMARY OF THE INVENTION

One object of the present invention is to provide an improved electrochemical device, which is easier to produce.

This object is according to a first aspect achieved through an electrochemical device comprising
at least one enclosure for a stack of sheets of electrochemical device forming material comprising at least one sheet of a first type of electrode, at least one sheet of a second type of electrode and at least one separator sheet between the sheets of the two types of electrodes,
the enclosure comprising a number of pieces comprising a first piece and a second piece and the pieces being joined to each other using welding, hemming, crimping or punchcrimping for forming an interior volume that houses the stack.

The first and second piece may each have a first edge, where the first edge of the first piece may be joined to the first edge of the second piece for forming a first mechanical connection. The first edge of the first piece may additionally be folded around the first edge of the second piece or vice versa.

The pieces may further comprise a third piece comprising a first edge and the second piece may comprise a second edge. In this case the first edge of the third piece may additionally be joined to the second edge of the second piece for forming a second mechanical connection, where the first edge of the third piece may additionally be folded around the second edge of the second piece or vice versa.

There may furthermore be a sealing agent between the edges of at least one mechanical connection.

The enclosure may comprise a top and a bottom separated by at least one lateral wall.

The stack may have a first end with a bottom sheet, which first end faces the bottom of the enclosure. The stack may also have a second end with a top sheet, which second end faces the top of the enclosure.

The top, bottom and the at least one lateral wall may be made of metallic material and the metallic material may be coated with electrically insulating material on surfaces of the metallic material facing the interior volume. As an alternative the at least one wall and possibly also the lid and bottom may be polymeric.

The stack may be placed in the interior volume. In this case the stack may be compressed by pressure applied through the top and bottom or a first and another opposite lateral wall of the enclosure. This may be achieved through the height of the enclosure being smaller than an original stack height in an axial direction of the stack, where the original stack height is the stack height before the stack is placed in the interior volume. A pressing of the top or a first lateral wall along the axial direction towards the bottom or the other lateral wall would then compress the stack. Of course, additionally or instead the bottom or the other lateral wall could be pressed toward the top or first lateral wall. In this case the compressing activity is started before the pieces are joined to each other.

An enclosure additionally comprises at least one flexible compression element being provided on the exterior of at least one lateral wall. As an alternative each of the top and bottom may be equipped with a flexible compression element .

The bottom and/or the top of an enclosure may additionally be corrugated. There may also be a corrugation adapting element in the interior volume, which corrugation adapting element levels out grooves on an inner surface of the bottom and/or lid facing the stack so that the corrugations do not change the shape of the sheets of the stack during compression.

An enclosure may also comprise at least one pretensioning element, where each pretensioning element may be provided at one end of the stack and face a top or a bottom sheet of the stack.

The at least one pretensioning element may comprise an internal pretensioning element in the interior volume placed between the stack and the top or bottom of the enclosure. There may additionally be a bonding element between the top or bottom of the enclosure and the internal pretensioning element. This bonding element may be realized as an internal glue or a bonding gap filler.

The at least one pretensioning element may additionally or instead comprise an external pretension element provided as the top or the bottom of the enclosure. In this case there may be a foam element on the external pretensioning element in a direction facing away from the stack.

The at least one pretensioning element may be concave with a focal point. In this case the pretensioning element may additionally be placed between the stack and the focal point.

An enclosure may also comprise at least one vent element in the top, bottom or at least one wall.

An enclosure may furthermore comprise a first electrical connection to the electrodes of the first type and a second electrical connection to the electrodes of the second type.

The first and second electrical connections may be provided via the first mechanical connection. The first electrical connection may as an example be provided between the first edges of the first and second pieces at a lateral wall of the second piece provided at one side of the stack and the second electrical connection may be provided between the first edges of the first and second pieces at another opposite lateral wall of the second piece on an opposite side of the stack.

Alternatively, one electrical connection may be provided through a lateral wall of the enclosure and the other electrical connection may be provided through an opposite lateral wall of the enclosure. As yet another alternative one electrical connection may be provided via the top of the enclosure and the other may be provided via the bottom of the enclosure. Both electrical connections may additionally be provided via the same surface. They may thus be provided via the top, the bottom or the same lateral wall.

At least one electrical connection may additionally comprise a tab that runs from within the enclosure to outside of the enclosure, which tab comprises a conductor surrounded by insulation.

The electrochemical device may further comprise two or more enclosures, which enclosures are stacked onto each other through the first mechanical connection of an enclosure mating with a second mechanical connection of a neighbouring enclosure.

The mating may be achieved through the first mechanical connection having an inner diameter or side defined by the first edge of the first piece being aligned with an outer diameter or side of the second mechanical connection defined by the first edge of the third piece or vice versa.

The first piece of an enclosure may be electrically insulating or the enclosure may further comprise electrical insulation between the first piece and the third piece of a neighbouring enclosure.

The first piece of the enclosure may be in electrical contact with the third piece of the neighbouring enclosure and in each enclosure the second edge of the second piece may be electrically isolated from the first edge of the third piece and/or the first edge of the second piece may be electrically isolated from the first edge of the first piece.

The second piece may be a container and the first piece may be a lid to the container. As an alternative the first piece may form half a shell of the enclosure and the second piece may form another half a shell of the enclosure

At least one of the number of pieces may be rigid and at least one of the other pieces may be rigid or semirigid.

The present invention has a number of advantages. It provides an enclosure that has a high safety level and that can be produced in large numbers at a competitive cost and with high speed.

### BRIEF DESCRIPTION OF THE DRAWINGS

The present invention will in the following be described with reference being made to the accompanying drawings, where
fig. 1a and b show sectional views of a first type of cell enclosure and a first variation of a second type of cell enclosure,
fig. 2a shows a sectional view of the first type of cell enclosure with a stack of sheets of electrochemical device forming material used to form a cell,
fig. 2b shows a sectional view of the first variation of the second type of cell enclosure with a stack of sheets of electrochemical device forming material used to form a cell,
fig. 2c - d show sectional views of a second and third variation of the second type of cell enclosure with stacks of sheets of electrochemical device forming material used to form cell,
fig. 2e shows a sectional view of a first variation of a third type of cell enclosure with a stack of sheets of electrochemical device forming material used to form a cell,
fig. 2f schematically show various possible cross-sectional areas of the first, second and optional third piece,
fig. 3a - e show different realizations of compression and pretension elements used in the first type of cell enclosure and the first variation of the second type of cell enclosure, where all are combined with a stack of sheets of electrochemical device forming material,
fig. 4a - d show different ways of realizing electrical connections to electrode sheets in the first type of cell enclosure, the first variation of the second type of cell enclosure and the first variation of the third type of cell enclosure,
fig. 5a - c show alternatives in the provision of electrical connections to electrode sheets in the first variation of the third type of cell enclosure,
fig. 6a and 6b show alternatives in the provision of electrical connections to electrode sheets in a fourth and a fifth type of cell enclosure, and
fig. 7a - c show different stacks of the third first type of cell enclosure, a second variation of the third type of cell enclosure and a third variation of the third type of cell enclosure without and with the electrodes being electrically interconnected using the enclosures.

### DETAILED DESCRIPTION OF THE INVENTION

The present invention concerns an electrochemical device, such as a battery or fuel cell, comprising a stack of electrochemical device forming sheets comprising at least one first type of electrode sheet, at least one second type of electrode sheet and at least one separator sheet between sheets of the two types of electrodes.

Aspects of the present disclosure present solutions to provide rigid or semi-rigid cell enclosures and casings or hulls with high safety level that can be mass produced at competitive cost and with high speed.

The electrochemical device may comprise at least one enclosure, where such an enclosure is formed using a number of pieces comprising a first piece and a second piece. Sheets of electrochemical device forming material, such as a sheet of a first type of electrode, a sheet of a second type of electrode and one or more separator sheets, may be placed in the enclosure. Thereby the stack may comprise at least one sheet of the first type of electrode, at least one sheet of the second type of electrode and at least one separator sheet between the sheets of the two types of electrodes. The stack may additionally be a laminate where the sheets form different layers of the laminate.

The number of pieces are then joined together for forming an interior volume of the enclosure and in this joining enclosing techniques used for tins and cans can be employed, such as any kind of welding like laser welding, conventional welding or any type of hemming, crimp or punch-crimp like bonding.

At least one of the number of pieces may be rigid and at least one of the other pieces may be semirigid.

The sheets may also be pre-soaked in electrolyte. Alternatively, electrolyte may be filled into the enclosure, before or after the stack has been placed in it.

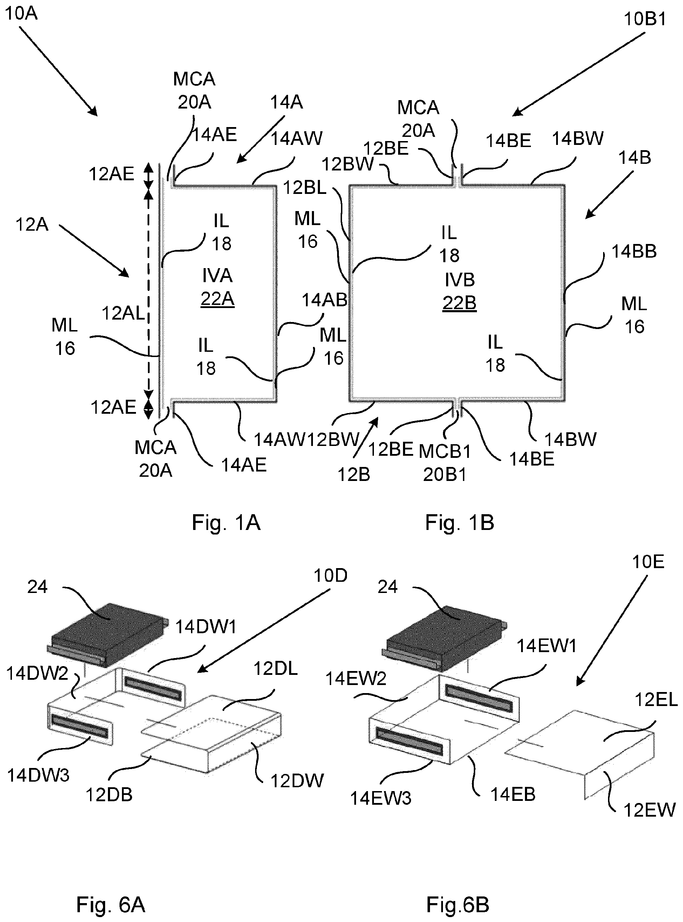

Fig. 1a shows a cross-sectional view of a first type of enclosure 10A formed as a box with a lid and comprising a first piece 12A and a second piece 14A, where the second piece 14A may be shaped as a box or a cylinder and the first piece 12A may be shaped as a rectangular or circular lid for the box or cylinder. The second piece 14A is thus a container and the first piece 12A is a lid to the container.

The second piece 14A may more particularly have a bottom 14AB enclosed by at least one side wall 14AW, where the sidewall 14AW is oriented at right angles to the bottom 14AB or inclined with an angle. The first piece 12A is additionally parallel with the bottom 14AB of the second piece 14A. Thereby an enclosure having an interior volume IVA 22A is formed by the first and the second pieces 12A and 14A, in which volume 22A the stack may be placed. The first piece 12A may have a first edge 12AE and the second piece 14A may have a first edge 14AE. The first and second pieces 12A and 14A thus each has a first edge 12AE and 14AE. The first edge 12AE of the first piece 12A may be provided at the periphery of the lid, stretching out beyond the walls 14AW of the second piece 14A, while the first edge 14AE of the second piece 14A may be angled away, for instance 90 degrees, from the wall 14AW of the second piece 14A. The first edge 14AE of the second piece 14A may be parallel and aligned with the first edge 12AE of the first piece 12A.

Moreover, it can also be seen that the enclosure comprises a top, in this case provided by the lid 12AL of the first piece 12A and a bottom, in this case formed by the bottom 14AB of the second piece 14A, where the top and bottom are separated by at least one lateral wall, which at least one lateral wall is formed by the walls 14AW of the second piece 14A.

The first and second pieces 12A and 14A may additionally each comprise a metallic layer ML 16 and an insulating layer IL 18, where the insulating layer 18 is provided in the interior of the enclosure, i.e. facing inwards towards the interior volume 22A and the metallic layer 16 is provided at the exterior of the piece, i.e. facing away from the inner volume 22A. The first and second pieces 12A and 14A may thereby be essentially metallic, with the surfaces of the first and second piece 12A and 14A that face inward towards the inner volume 22A of the enclosure being coated or provided with the insulating material 18. The surface of the lid 12AL of the first piece 12A that is to face the bottom of the second piece 14A is thus covered with the insulating material as is the surface of the bottom 14AB of the second piece 14A that is to face the first piece 12A. Also, the inner surfaces of the wall 14AW that face inward towards the inner volume 22A of the enclosure are covered with insulating material 18. Furthermore, also the surfaces of the edge 12AE of the first piece 12 and the edge 14AE of the second piece that face each other may be provided with insulating material, which insulating material may stretch out all the way to the rim or end of the corresponding edge or partly out to the rim or end, such as half-way out to the rim or end.

The metallic layer 16 may be made of e.g. aluminum and the electrically insulating interior layer 18 may for instance be a polymer or ceramic (cold gas spray) which is fixed to the outer metallic layer by bonding or lamination. Stiffness of the first and second pieces may be fine-tuned by material choice and forming (e.g. embossing etc.).

The first edge 12AE of the first piece 12A may then be joined to the first edge 14AE of the second piece 14A in order to form a first mechanical connection MCA 20A between the first and second pieces, which first mechanical connection MCA seals the enclosure. As was mentioned earlier, the joining may be made using welding, such as laser and resistance welding, crimping, punch-crimping or any kind of hemming.

Fig. 1b shows a first version of a second type of enclosure 10B1 also comprising a first and a second piece 12B and 14B, where the second piece 14B may have the same realization as the second piece 14A of the first type of enclosure 10A. The second piece 14B in this case has the same shape as the second piece 14A of the first type of enclosure and forms one half of a shell, i.e. it has a bottom 14BB, at least one side wall 14 BW and a first edge 14BE. Moreover, the first piece 12B has the same shape as the second piece and forms a second half of the shell. The first piece 12B has a lid or top 12BL enclosed by at least one side wall 12BW, where the side wall 12BW is oriented at right angles to the lid or top 12BL and the lid or top 12BL of the first piece 12B being parallel with and facing the bottom 14BB of the second piece 14B and the at least one wall 12BW of the first piece 12B being aligned with the at least one wall 14BW of the second piece 14B. The edges 12BE and 14BE of the first and second pieces 12A and 14A are here joined together in the same way as in the first type of enclosure in order to form the first type of mechanical connection MCA 2oA.

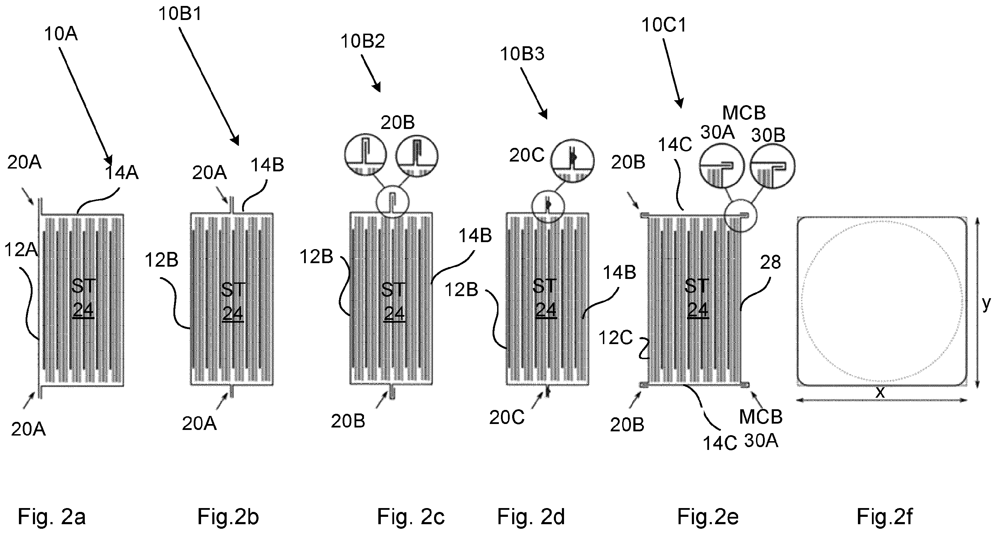

Fig. 2a schematically shows the first type of enclosure 10A, where a stack ST 24 comprising sheets forming first electrodes, second electrodes and separators is provided in the interior volume of the enclosure and the first and second pieces 12A and 14B being joined with the first type of first mechanical connection 20A, which can be realized using any kind of welding like laser welding or conventional resistance welding or bonding.

The stack here has a first end with a bottom sheet, which first end faces the bottom of the enclosure. The stack also has a second end with a top sheet, which second end faces the top of the enclosure.

Fig. 2b schematically shows the first variation of the second type of enclosure 10B1, where a stack ST 24 comprising sheets forming first electrodes, second electrodes and separators are provided in the interior volume of the enclosure, which is again sealed with the first type of first mechanical connection 20A. The same joining techniques may be used as in the first type of enclosure.

Fig. 2c schematically shows a second variation of the second type of enclosure 10B2 including a stack of sheets ST 24 forming electrodes and separators, where in this case a second type of first mechanical connection 20B is used. The joint may additionally be formed through crimp punch like bonding of the first edges of the first and second pieces to each other or by hemming. Thereby the second type of first mechanical connection 20B is obtained through the first edge of the first piece 12B being folded around the first edge of the second piece 14B. The second type of first mechanical connection 20B may additionally be hermetically sealed through providing a sealing or sealing-bonding agent between the first edges of the first and second pieces 12B and 14B. It should here be realized that it is as an alternative possible that the first edge of the second piece 14B is folded around the first edge of the first piece 12B. Alternatively, both edges could together be turned by 180 degrees (not shown in schematic).

Fig. 2d shows a third variation of the second type of enclosure 10B3, where there is a third type of first mechanical connection 20C that is similar to the first type 20A. There is thus a first edge of the first and second piece that are aligned with each other, but no edge is folded over the other. However, in this case the first edge of the second piece 14B is equipped with a sealing groove and a sealing agent is placed in the groove and between the first edges of the first and second pieces 12B and 14B for hermetically sealing the first mechanical connection 20C. This has the advantage of providing better control of where in the first mechanical connection 20C the sealing agent is applied. It should be realized that the sealing groove may just as well be provided in the first edge of the first piece. This sealing variant can be combined with any of the previously mentioned bonding mechanisms, e.g. hemming.

Fig. 2e shows a first version of a third type of enclosure 10C1b. In this type there is a first and a second piece 12C and 14C each provided with a first edge. However, there is also a third piece 28 also comprising a first edge. Furthermore, the second piece 14C also comprises a second edge. In this case the first piece 12C forms a lid or top of the enclosure, the third piece 28 forms a bottom of the enclosure and the second piece 14C forms at least one wall placed between the top and bottom of the enclosure. The first and third pieces 12C and 28 are in this case provided at opposite ends of the stack 24, while the second piece 14C surrounds the stack. In this case the first edge of the second piece 14C is provided at the periphery of one end of the at least one wall, stretching out beyond the lid of the first piece 12C and the second edge of the second piece 14C is provided at the periphery of another end of the at least one wall, stretching out beyond the bottom of the third piece 28. In this case there is a first mechanical connection 20B that is of the second type obtained through the first edge of the first piece 12C being folded around the first edge of the second piece 14C and a second mechanical connection MCB in which the first edge of the third piece 28 is joined to the second edge of the second piece. In this variation of the third type of enclosure 10C, the second mechanical connection is of a first type 30A that is the same as the second type of the first mechanical connection and obtained through the first edge of the third piece 28 being folded around the second edge of the second piece.

As can be seen it is likewise possible that the second mechanical connection MCB is of a second type 30B where the second edge of the second piece 14C is folded around the first edge of the third piece 28. It is likewise possible that the first edge of the second piece 14C is folded around the first edge of the first piece 12C instead of the first edge of the first piece 12C being folded around the first edge of the second piece 14C. It is also possible that a sealing agent is placed in the first and second mechanical connections. Therefore, a sealing agent may be used between the edges of at least one mechanical connection of the enclosure and with advantage between all mechanical connections of the enclosure.

The third type of enclosure has the advantage of being suitable for stacking of enclosures on each other.

As can be seen in fig. 2f, the shape of the first and third pieces and the cross-section of the second piece may have rectangular or circular forms with various aspect ratios of x and y combinations. Rectangular shapes may be with or without corner radius.

The first, second and the optional third piece may additionally be made of single aluminium or hybrid polymer aluminium layers.

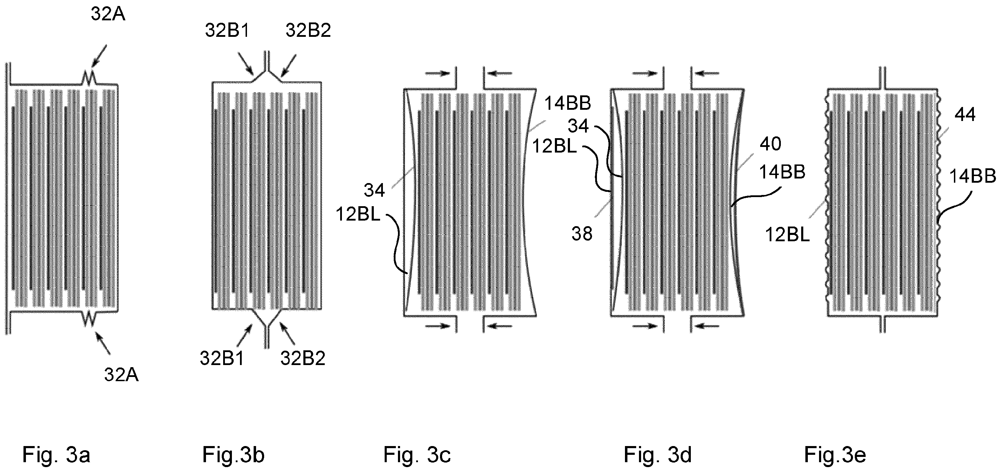

Fig. 3a - e show different ways of providing pre-tensioning of the enclosure in order to allow the enclosure to be compressed.

Fig 3a schematically shows the first type of enclosure, where there is an external pretensioning element 32A placed on the side wall of the second piece. The pretensioning element 32A is flexible in an axial direction of the stack, i.e in a direction between the top and bottom of the enclosure and thereby allows the first piece and the bottom of the second piece to be pressed against each other.

Fig. 3b shows a second type of external pretensioning element for the first version of the second type of enclosure. In this case the lateral wall of the first piece leads to the first edge of the piece via a first angled part 32B1 and the lateral wall of the second piece leads to the first edge of the piece via a second angled part 32B2, where the angled parts 32B1 and 32B2 are angled by approximately 0 -45 degrees to the corresponding wall and together form the second type of external pretensioning element. The angled parts are flexible and will allow the bottom and top of the first and second pieces be pressed against each other, which pressing will increase the angle to the lateral wall. It is additionally possible to increase the compression force after release of external compression force. This can be made if for instance the angled parts 32B1 and 32B2 are provided with bonding material on their inner surfaces, i.e. on their surfaces that face inwards towards the interior volume. The pressing of the angled parts toward each other may then cause them to bond, which thereby increases the compression force.

It can thus be seen that there is at least one flexible compression element on the exterior of at least one lateral wall.

As an alternative each of the top and bottom may be equipped with a stiff or flexible compression element.

The enclosure may also comprise at least one pretensioning element that is provided at one end of the stack and faces a top or a bottom sheet of the stack.

The at least one pretensioning element may additionally comprise an internal pretensioning element in the interior volume placed between the stack and the top or bottom of the enclosure. The at least one pretensioning element may additionally or instead comprise an external pretension element provided as the top or the bottom of the enclosure.

Fig. 3c shows the first version of the second type of enclosure, where such an internal pretensioning element in the form of a concave shaped flexible pretensioning element 34 is provided at one end of the stack internally in the enclosure. The pretensioning element 34 is more particularly provided in the interior volume of the enclosure and here between the top or lid 12BL of the rigid first piece and the top of the stack. Furthermore, the bottom 14BB of the second piece is in this example provided as an external pretension element that has a concave shape, which bottom 14BB is provided at the opposite end of the stack, i.e. at the bottom of the stack. Concave shaped side walls or internal concave shaped elements can either be single axis concave or dual concave (90°deg offset) shaped elements. Concave shape of left and right side may be aligned in concave axis or 90°deg shifted.

A concave pretensioning element has a focal point. It should be realized that the pretensioning element is placed between the stack 24 and this focal point.

A pressing of the top 12BL of the first piece towards the bottom 14BB of the second piece, using the first edges of the first and second pieces will then lead to a compression of the stack.

Fig. 3d show some additional elements that have been added to the pretensioning elements of the first version of the second type of enclosure of fig. 3c. There may for instance be a bonding element between the top or bottom of the enclosure and the internal pretensioning element. In this case there is a bonding element realized as an internal glue or bonding gap filler 38 between the pretensioning element 34 and the top 12BL of the first piece. There may also be a foam element on the external pretensioning element in a direction facing away from the stack. In the present example there is a foam 40 on the exterior of the bottom 14BB of the second piece. These elements 38 and 40 may be used to adjust uniform pretensioning.

It should here be realized that only one of the pre-tensioning elements shown in fig. 3c and 3d may be used, either the internal pre-tensioning element 34 or the external pre-tensioning element, which sole pretensioning element be provided at any of the two ends of the stack. Furthermore, ff two pre-tensioning elements are used they may also both be of the same type, either internal or external or be a part of the cell enclosure itself.

Fig. 3e schematically shows the first version of the second type of enclosure, where corrugation indentations are provided on the top 12BL of the first piece and the bottom 14BB of the second piece. It can thereby be seen that the top 12BL of the first piece and/or the bottom 14BB of the second piece is corrugated.

It is possible to use a corrugation adapting element in the interior volume aligned with the corrugations of the corresponding bottom or top, which corrugation adapting element levels out grooves on an inner surface of the bottom and/or lid facing the stack. In this case the corrugation adapting element 44 is provided through glue or gap filler like bonding between the two layers similarly as in fig. 3d. Here there is such glue or gap filler 44 between the bottom of the first piece and the neighbouring bottom sheet at the bottom the stack. Through the provision of the corrugation adapting element, it is ensured that the corrugations do not change the shape of the sheets, such as make indentations, during compression.

It should here be realized that it is additionally possible to combine the pre-tensioning elements shown in fig. 3c and 3d with corrugation indentations. There may thus be one or two concave pre-tensioning elements combined with corrugated top and/or bottom. Concave elements may thus be combined with local corrugations to improve stiffness and compression.

It should also be realized that instead of or in addition to using different types of pre-tensioning elements, the height of the enclosure can be made smaller than an original stack height in the axial direction of the stack where the original stack height is the stack height before the stack is placed in the interior volume. A pressing of the first piece along the axial direction towards the second and/or the third piece would then compress the stack.

In this case compressing activity is started before the pieces are joined to each other, and the joining is made when the above-mentioned 3epcies are pressed against each other. The top and bottom of the enclosure would thereby compress the stack In that case an additional compression adjustment element is not required but can be integrated optionally.

The stack may thus be compressed by pressure applied through the top and bottom or a first and another opposite lateral wall of the enclosure. A pressing of the top or a first lateral wall along the axial direction towards the bottom or the other lateral wall would then compress the stack. Of course, additionally or instead the bottom or the other lateral wall could be pressed toward the top or first lateral wall.

There may furthermore exist a first electrical connection to the electrodes of the first type and a second electrical connection to the electrodes of the second type.

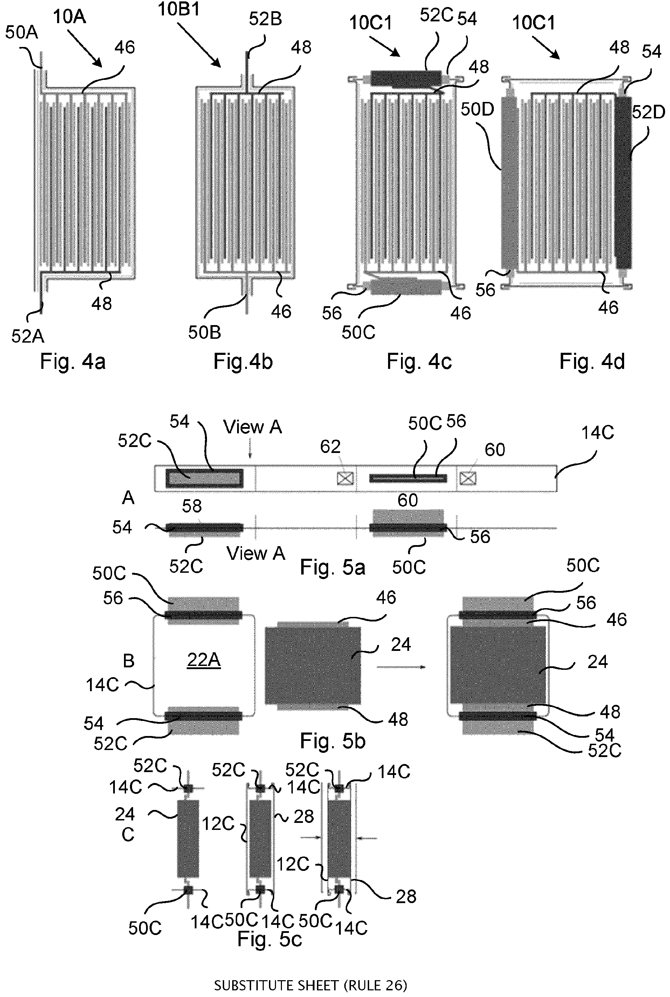

Fig. 4a-d disclose different ways to provide such electrical connections for the different types of electrodes in the different types of enclosures.

In fig. 4a - d all electrodes of the first type are connected to a first connection strip 46 provided on one side of the stack and all electrodes of the second type are connected to a second connection strip 48 provided on an opposite side of the stack, where the first connection strip 46 is in turn connected to a first conductor leaving the enclosure and the second connection strip 46 is connected to a second conductor leaving the enclosure. The connection strips could be realized as separate tab parts or be partially or entirely formed by uncoated electrode foil sections.

Fig. 4a shows one realization in the first type of enclosure 10A, where the first connection strip 46 is provided along a wall of the second piece at one side of the stack and the first conductor 50A exits or leaves the enclosure through first mechanical connection at this side of the stack. The second connection strip 48 is provided along a wall of the second piece at an opposite side of the stack and the second conductor 52A exits the enclosure through the first mechanical connection at the same side of the stack.

The first and second electrical connections are thereby provided via the first mechanical connection. More particularly, the first electrical connection is provided between the first edges of the first and second pieces at a lateral wall of the second piece located at one side of the stack and the second electrical connection is provided between the first edges of the first and second pieces at another opposite lateral wall of the second piece located on an opposite side of the stack.

Fig. 4b shows the realization in the first variation of the second type of enclosure 10B1, where the first connection strip 46 is provided along the walls of the first and second pieces at one side of the stack and the first conductor 50B exits the enclosure through the first mechanical connection at this side of the stack. The second connection strip 48 is provided along the walls of the first and second pieces at an opposite side of the stack and the second conductor 52B exits the enclosure through the first mechanical connection at the same side of the stack. It can be seen that the side of the stack along which the first connection strip 46 is provided is the same as the side along which the second connection strip 48 is provided in the first type of enclosure in fig. 4a.

It should here be mentioned that it is possible that two tabs of insulating material are provided in the mechanical connections. The first and second conductors then leave the interior volume via these two tabs. If the first edges of the first and second pieces are provided with an insulating layer, this insulating layer may provide additional insulation. The use of tabs will be described in more detail in relation to fig. 4c and 4d..

Furthermore, one electrical connection may be provided through a lateral wall of the enclosure and the other electrical connection may be provided through an opposite lateral wall of the enclosure.

Fig. 4c shows a first realization in the first variation of the third type of enclosure 10C1 exemplifying this. In this case the first conductor 50C exits the enclosure via a first part of the wall of the second piece and the second conductor 52C exits the enclosure via a second part of the wall of the second piece, where a part may be a side of the wall having a rectangular cross-section. In this case the first conductor 50C may be encircled by insulating material 56 and the conductor and insulating material may be provided in the form of a tab that goes through said wall and the second conductor 52C may be encircled by insulating material 54 and the conductor and insulating material may be provided in the form of a tab that goes through said wall. It can be seen that the side of the stack along which the first connection strip 46 is provided is the same as the side along which the first connection strip 46 is provided in the first variation of the second type of enclosure in fig. 4b. It can be seen that the walls via which the first and second conductors leave the enclosure are the same as in fig. 4b.

As an alternative, one electrical connection may be provided via the top of the enclosure and the other may be provided via the bottom of the enclosure.

Fig. 4d shows a second realization of the first version of the third type of enclosure 10C1 exemplifying this. In this case the first conductor 50D exits the enclosure via the first piece, while the second conductor 52D exits the enclosure via the third piece. Both the conductors are provided in tabs., where insulation 54 and 56 surrounds the conductor 50D, 52D and which tabs run through the corresponding piece.

As yet another alternative, both electrical connections may be provided via the same surface. They may thus be provided via the top, the bottom or the same lateral wall.

Fig. 5a shows a side view of the second piece 14C according to the third type of enclosure before being folded into a box-like shape as well as from above. In this case there is a first tab 58 for the first electrical connection through a first wall and a second tab 60 for the second electrical connection through the wall, where the first tab 58 comprises the first conductor 52C surrounded by insulation 54 and the second tab 60 comprises the second conductor 50C surrounded by insulation 56. There is also a vent element 62 in the form of a vent disc provided in the second and fourth walls of the second piece 14C for releasing pressure in the enclosure in case of e.g. thermal runaway.

Although vent elements are shown as being provided in the second and fourth walls of the second piece, it should be realized that a vent element may instead or in addition be placed in the first and/or the third walls. There may also be only one vent element in the second piece. Vent elements may also be provided in the first and/or third pieces. It should therefore be realized that a vent element can be provided in the top, bottom or at least one wall.

Fig. 5b shows from left to right: a view from above of an empty second piece 14C according to the third type of the first type of enclosure with a first and a second tab made up of a first conductor 50C surrounded by insulation 56 and a second conductor 52C surrounded by insulation 54 going through a first and a third wall, which second piece can consist of bended and welded/bonded metal sheet or direct extrusion polymer, a stack 46 of sheets with a first connection strip 46 provided on a first side of the stack and a second connection strip 48 provided on a second side of the stack as well as the stack 24 with connection strips 46 and 48 being placed in the enclosure in contact with first and second conductors 56 and 54 of the two tabs.

Fig. 5c schematically shows from left to right: a side view of the stack 24 being connected, via the first and second connection strips, to the first and second conductors 50C and 52C provided through the second piece 14C of the first version of the third type of enclosure, a side view of the stack 24 being connected, via the first and second connection strips, to the first and second conductors 50C and 52C provided through the second piece 14C of the first version of the third type of enclosure when the second piece 14C is joined to the first and third pieces 12C and 28 as well as a side view of the stack 24 being connected, via the first and second connection strips, to the first and second conductors 50C and 52C provided through the second piece 14C of the first version of the third type of enclosure, when the first and third walls are corrugated for pre-tensioning purposes and when the first and second pieces are pressed against each other.

As can be seen in fig. 5a-c, at least one electrical connection may comprise a tab running from within the enclosure to outside of the enclosure, which tab comprises a conductor surrounded by insulation.

Fig. 6a and 6b show alternatives in the provision of electrical connections to electrode sheets in a fourth and a fifth type of cell enclosure 1D and 10E.

The fourth type of enclosure 10D comprises a first piece comprising a lid or a top 12DL, a bottom 14DW and a bottom 12DB joined by a wall 12DW and a second piece 14D formed through a first, second, and third wall 14DW1, 14DW2 and 14DW3. The first and third walls 14DW1 and 14DW3 of the second piece are parallel with each other, while the second wall 14DW2 of the second piece is perpendicular to both and joined to them. The first and third walls 14DW1 and 14DW3 are also provided with the previously mentioned tabs. During assembly of the cell, the stack 24 is first connected to the tabs of the first and second walls 14DW1 and 14DW3 and then the second piece is slid in-between the top and the bottom 12DL and 12DB of the first piece until the first and second walls 14DW1 and 14DW3 of the second piece abut the wall 12DW of the first piece, so that the first, second and third walls 14DW1, 14DW2 and 14DW3 of the second piece together with the wall 12DW of the first piece form the lateral walls of the enclosure between the lid 12DL and bottom 12DB. The two pieces may then be joined to each other using any of the previously mentioned techniques, such as bonding, welding, hemming, crimping etc.

In the fifth type of enclosure 10E the bottom 14EB is instead a part of the second piece that is perpendicular and joined to the first, second and third walls 14EW1, 14EW2 and 14EW3. Also here, the first and third walls 14EW1 and 14EW3 are provided with the previously mentioned tabs. In this case the second piece may be slid below or underneath the top 12EL of the first piece until the first and third walls 14EW1 and 14EW3 of the second piece abut the wall 12EW of the first piece.

It should here be realized that the structure is just as well applicable for a stack that is joined to tabs of the top and bottom of the enclosure. In this case the first and second pieces of the fourth and fifth types of enclosures could instead be considered to be a second and first piece, respectively, of a sixth and seven type of enclosure.

It is possible that the different enclosures can be stacked on each other. The electrochemical device may thus comprise two or more enclosures. It is additionally possible that if the enclosures are of the third type, these may be stacked onto each other through the first mechanical connection of an enclosure mating with a second mechanical connection of a neighboring enclosure.

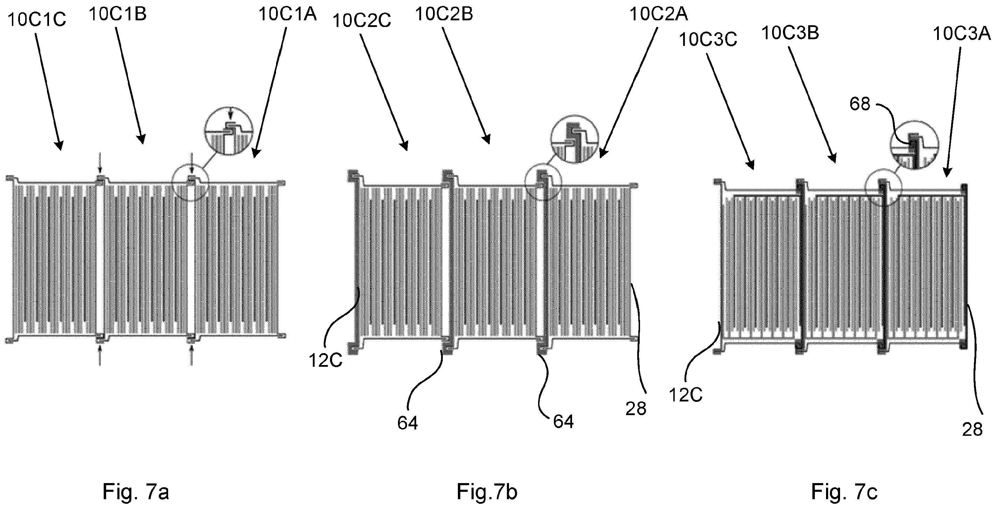

Fig. 7a - c show how this can be done for the third type of enclosure.

Fig. 7a shows a stack of enclosures 10C1A, 10C1B and 10C1C according to the first version of the third type. As can be seen, it is here possible that the first mechanical connection has an inner diameter or side defined by the first edge of the first piece that is aligned with an outer diameter or side of the second mechanical connection and defined by the first edge of the third piece. It is more particularly possible that a part of the first edge of the first piece that rests on an inner surface of the first edge of the second piece is adapted to and rests on a part of the first edge of the third piece that rests on an outer surface of the second edge of the second piece.

It is additionally possible that the first piece of each enclosure is electrically insulating or that an enclosure further comprises electrical insulation between its first piece and the third piece of the neighbouring enclosure with which it mates.

Fig. 7b shows a stack of enclosures 10C2A, 10C2B and 10C2C according to a second version of the third type, where this is exemplified. As can be seen in fig. 7b it is also possible to make the first piece 12C electrically insulating or to place electrical insulation 64 between the first piece 12C of an enclosure and the third piece of a following enclosure in the enclosure stack, where the insulation would have to be placed also around the first mechanical connection. The insulation 64 may be provided as an additionally layer provided on the exterior of the first piece 12C of every enclosure 10C2. As an alternative it is possible that the third piece instead receives this treatment.

It is additionally possible that the first piece of an enclosure is in electrical contact with the third piece of a neighboring mating enclosure and that in each enclosure the second edge of the second piece is electrically isolated from the first edge of the third piece and/or the first edge of the second piece is electrically isolated from the first edge of the first piece.

Fig. 7c shows a stack of enclosures 10C3A, 10C3B and 10C3C according to a third version of the third type exemplifying this situation. As can be seen in fig. 7c it is possible to electrically interconnect the stacked enclosures when the first and second electrical connections are provided via the first and third pieces 12C and 28. In this case the first and third pieces 12C and 28 are used for electrically connecting one enclosure 10C3B with a neighbour 10C3A in the enclosure stack. In order to avoid a short-circuit the second mechanical connection and then especially the second edge of the second piece used in the second mechanical connection of said one enclosure 10C3B may be isolated 68 from the first edge of the third piece in the same enclosure as well as from the first edge of a first piece of a neighboring enclosure 10C3A that the second mechanical connection rests on or abuts. It should here be realized that as an alternative, it is possible that a first mechanical connection and more particularly that the first edge of the second piece is isolated in a similar way from the first edge of the first piece or the first edge of the third piece which the first piece abuts.

There is thus a combination of cells to modules, strings and pack by mechanical coupling with mechanical only (fig. 7a), mechanical isolating and direct mechanical (fig. 7b) and electrical coupling (fig. 7c). Crimped or bonded cell areas can as well be used for fixation on module or pack mechanical structure.

Aspects of the present disclosure give solutions to provide rigid cell enclosures and hulls with high safety level at competitive cost, high speed and mass production. In addition, many cell chemistries require compression of cells when assembled in modules or packs. This is an inaccurate method and results in complex and failure prone systems resulting in low or unforeseeable ageing behavior of entire modules of single cells in modules, due to inaccurate compression conditions.

Key points of this disclosure are:
- Cost efficient half shell forming with multiple options for subsequent closing lid fixation.
- Embodiment to pack cell stack in hybrid hull consisting of mechanical rigid part and electrical isolating layer.
- Combination of stiff and predetermined flexible elements to adjust cell compression. These embodiments with pretensioned hull or enclosure parts allow for electrode stack compression without the need to compress on module or pack level (tension free assembly on module and pack level).
- Use of existing mass production processes from food packaging industries adapted to given conditions of cell enclosing.
- Hull or enclosure shape readiness for simple and cost-efficient cell stacking to modules and packs

From the foregoing discussion it is evident that the present invention can be varied in a multitude of ways. Shown schematics represent only exemplary embodiments and given list of embodiments is to be considered as non-limiting. It shall consequently be realized that the present invention is only to be limited by the following claims.

## Claims

1. An electrochemical device comprising at least one enclosure (10A; 10B1; 10B2; 10B3, 10C1; 10C2, 10C3; 10D; 10E) for a stack (24) of sheets of electrochemical device forming material comprising at least one sheet of a first type of electrode, at least one sheet of a second type of electrode and at least one separator sheet between the sheets of the two types of electrodes,
said enclosure comprising a number of pieces comprising a first piece (12A; 12B; 12C) and a second piece (14A; 14B; 14C), said pieces being joined to each other using welding, hemming, crimping or punch-crimping for forming an interior volume (22A; 22B) that houses said stack,
said enclosure also comprising a top (12AL; 12BL; 12DL; 12EL) and a bottom (14AB; 14BB; 28; 12DB; 14EB) separated by at least one lateral wall (14AW; 12BW, 14BW; 12DW, 14DW1, 14DW2, 14DW3; 12EW, 14EW1, 14EW2, 14EW3),
the electrochemical device further comprising at least one flexible compression element (32A; 32B1, 32B2) on the exterior of at least one lateral wall or each of the top and bottom.

2. The electrochemical device according to claim 1, wherein the first and second piece each has a first edge (12AE, 14AE; 12BE, 14BE), where the first edge (12AE; 12BE) of the first piece (12A; 12B) is joined to the first edge (14AE; 14BE) of the second piece (12A; 14A) for forming a first mechanical connection (20A; 20B; 20C).

3. The electrochemical device according to claim 2, wherein the first edge of the first piece is folded around the first edge of the second piece or vice versa.

4. The electrochemical device according to claim 2 or 3, said pieces further comprising a third piece (28) comprising a first edge, wherein the second piece comprises a second edge and the first edge of the third piece is joined to the second edge of the second piece for forming a second mechanical connection (30A; 30B).

5. The electrochemical device according to claim 4, wherein the first edge of the third piece is folded around the second edge of the second piece or vice versa.

6. The electrochemical device according to any previous claim, further comprising the stack (24) in the interior volume, which stack is compressed by pressure applied through the top and bottom or a first and another opposite lateral wall of the enclosure.

7. The electrochemical device according to any previous claim, wherein the top (12AL; 12BL), bottom (14AB; 14BB) and the at least one lateral wall (14AW; 12BW, 14BW) are made of metallic material (16) and coated with electrically insulating material (18) on surfaces of the metallic material (16) facing the interior volume (or is polymeric).

8. The electrochemical device according to any previous claim, wherein the bottom (14BB) and/or the top (12BL) is corrugated.

9. The electrochemical device according to any previous claim, further comprising at least one pretensioning element (34; 14BB), each pretensioning element being provided at one end of the stack (24) and facing a top or a bottom sheet of the stack (24).

10. The electrochemical device according to claim 9, wherein the at least one pretensioning element comprises an internal pretensioning element (34) in the interior volume (22B) placed between the stack (24) and the top (12BL) or bottom (14BB) of the enclosure.

11. The electrochemical device according to claim 9 or 10, wherein the at least one pretensioning element comprises an external pretension element (14BB) provided as the top or the bottom of the enclosure.

12. The electrochemical device according to any of claims 9 - 11, wherein the at least one pretensioning element (34, 14BB) is concave with a focal point and the pretensioning element (34; 14BB) is placed between the stack (24) and the focal point.

13. The electrochemical device according to any previous claim, further comprising at least one vent element (62) in the top, bottom or at least one wall (14C).

14. The electrochemical device according to any previous claim, further comprising a first electrical connection to the electrodes of the first type and a second electrical connection to the electrodes of the second type.

15. The electrochemical device according to claim 14 when depending on claim 2, wherein the first and second electrical connections are provided via the first mechanical connection (20A).

16. The electrochemical device according to claim 14, wherein one electrical connection is provided through a lateral wall of the enclosure and the other electrical connection is provided through an opposite lateral wall of the enclosure.

17. The electrochemical device according to claim 14, wherein one electrical connection is provided via the top of the enclosure and the other is provided via the bottom of the enclosure.

18. The electrochemical device according to any of claims 15 - 17, wherein at least one electrical connection comprises a tab (58, 60) running from within the enclosure to outside of the enclosure, said tab comprising a conductor (52C, 50C) surrounded by insulation (54, 56).

19. The electrochemical device according to any previous claim when depending on claim 4, the device comprising two or more enclosures, which enclosures (10C1A, 10C1B, 10C1C; 10C2A, 10C2B, 10C2C; 10C3A, 10C3B, 10C3C)) are stacked onto each other through the first mechanical connection (20C) of an enclosure (10C1A; 10C2A; 10C3A) mating with a second mechanical connection (30A) of a neighbouring enclosure (10C1B; 10C2B; 10C3B).

20. The electrochemical device according to claim 19, wherein the mating is achieved through the first mechanical connection having an inner diameter or side defined by the first edge of the first piece that is aligned with an outer diameter or side of the second mechanical connection defined by the first edge of the third piece or vice versa.

21. The electrochemical device according to claim 19 or 20, wherein the first piece (12C) of said enclosure (10C2A) is electrically insulating or further comprising electrical insulation (64) between the first piece (12C) of said enclosure (10C2A) and the third piece (28) of the neighbouring enclosure (10C2B).

22. The electrochemical device according to claim 19 or 21, wherein the first piece (12C) of said enclosure (10C3A) is in electrical contact with the third piece (28) of said neighbouring enclosure (10C3B) and in each enclosure the second edge of the second piece is electrically isolated (68) from the first edge of the third piece and/or the first edge of the second piece is electrically isolated from the first edge of the first piece.

## Patentansprüche

1. Elektrochemische Vorrichtung, die mindestens ein Gehäuse (10A; 10B1; 10B2; 10B3, 10C1; 10C2, 10C3; 10D; 10E) für einen Stapel (24) von Blättern aus einem die elektrochemische Vorrichtung bildenden Material umfasst, der mindestens ein Blatt eines ersten Elektrodentyps, mindestens ein Blatt eines zweiten Elektrodentyps und mindestens ein Separatorblatt zwischen den Blättern der zwei Elektrodentypen umfasst,
wobei das Gehäuse eine Anzahl von Teilen umfasst, die ein erstes Teil (12A; 12B; 12C) und ein zweites Teil (14A; 14B; 14C) umfassen, wobei die Teile durch Schweißen, Falzen, Bördeln oder Stanzbördeln zum Bilden eines Innenraums (22A; 22B), der den Stapel aufnimmt, miteinander verbunden sind,
wobei das Gehäuse auch eine Deckwand (12AL; 12BL; 12DL; 12EL) und einen Boden (14AB; 14BB; 28; 12DB; 14EB) umfasst, die durch mindestens eine Seitenwand (14AW; 12BW, 14BW; 12DW, 14DW1, 14DW2, 14DW3; 12EW, 14EW1, 14EW2, 14EW3) getrennt sind,
wobei die elektrochemische Vorrichtung ferner mindestens ein flexibles Kompressionselement (32A; 32B1, 32B2) auf der Außenseite mindestens einer Seitenwand oder sowohl der Deckwand als auch des Bodens umfasst.

2. Elektrochemische Vorrichtung nach Anspruch 1, wobei das erste und das zweite Teil jeweils einen ersten Rand (12AE, 14AE; 12BE, 14BE) aufweisen, wobei der erste Rand (12AE; 12BE) des ersten Teils (12A; 12B) mit dem ersten Rand (14AE; 14BE) des zweiten Teils (12A; 14A) zum Bilden einer ersten mechanischen Verbindung (20A; 20B; 20C) verbunden ist.

3. Elektrochemische Vorrichtung nach Anspruch 2, wobei der erste Rand des ersten Teils um den ersten Rand des zweiten Teils herumgelegt ist oder umgekehrt.

4. Elektrochemische Vorrichtung nach Anspruch 2 oder 3, wobei die Teile ferner ein drittes Teil (28) umfassen, das einen ersten Rand umfasst, wobei das zweite Teil einen zweiten Rand umfasst und der erste Rand des dritten Teils mit dem zweiten Rand des zweiten Teils zum Bilden einer zweiten mechanischen Verbindung (30A; 30B) verbunden ist.

5. Elektrochemische Vorrichtung nach Anspruch 4, wobei der erste Rand des dritten Teils um den zweiten Rand des zweiten Teils herumgelegt ist oder umgekehrt.

6. Elektrochemische Vorrichtung nach einem der vorhergehenden Ansprüche, die ferner den Stapel (24) in dem Innenraum umfasst, wobei der Stapel durch Druck, der durch die Deckwand und den Boden oder eine erste und eine andere, gegenüberliegende Seitenwand des Gehäuses ausgeübt wird, komprimiert wird.

7. Elektrochemische Vorrichtung nach einem der vorhergehenden Ansprüche, wobei die Deckwand (12AL; 12BL), der Boden (14AB; 14BB) und die mindestens eine Seitenwand (14AW; 12BW, 14BW) aus einem metallischen Material (16) hergestellt und auf dem Innenraum zugewandten Oberflächen des metallischen Materials (16) mit einem elektrisch isolierenden Material (18) beschichtet sind (oder polymer sind).

8. Elektrochemische Vorrichtung nach einem der vorhergehenden Ansprüche, wobei der Boden (14BB) und/oder die Deckwand (12BL) gewellt sind.

9. Elektrochemische Vorrichtung nach einem der vorhergehenden Ansprüche, die ferner mindestens ein Vorspannelement (34; 14BB) umfasst, wobei jedes Vorspannelement an einem Ende des Stapels (24) bereitgestellt und einem oberen oder einem unteren Blatt des Stapels (24) zugewandt ist.

10. Elektrochemische Vorrichtung nach Anspruch 9, wobei das mindestens eine Vorspannelement ein inneres Vorspannelement (34) in dem Innenraum (22B) umfasst, das zwischen dem Stapel (24) und der Deckwand (12BL) oder dem Boden (14BB) des Gehäuses platziert ist.

11. Elektrochemische Vorrichtung nach Anspruch 9 oder 10, wobei das mindestens eine Vorspannelement ein äußeres Vorspannelement (14BB) umfasst, das als die Deckwand oder der Boden des Gehäuses bereitgestellt ist.

12. Elektrochemische Vorrichtung nach einem der Ansprüche 9 bis 11, wobei das mindestens eine Vorspannelement (34, 14BB) konkav mit einem Brennpunkt ist und das Vorspannelement (34; 14BB) zwischen dem Stapel (24) und dem Brennpunkt platziert ist.

13. Elektrochemische Vorrichtung nach einem der vorhergehenden Ansprüche, die ferner mindestens ein Entlüftungselement (62) in der Deckwand, dem Boden oder mindestens einer Wand (14C) umfasst.

14. Elektrochemische Vorrichtung nach einem der vorhergehenden Ansprüche, die ferner eine erste elektrische Verbindung mit den Elektroden des ersten Typs und eine zweite elektrische Verbindung mit den Elektroden des zweiten Typs umfasst.

15. Elektrochemische Vorrichtung nach Anspruch 14, wenn abhängig von Anspruch 2, wobei die erste und die zweite elektrische Verbindung über die erste mechanische Verbindung (20A) bereitgestellt sind.

16. Elektrochemische Vorrichtung nach Anspruch 14, wobei eine elektrische Verbindung durch eine Seitenwand des Gehäuses bereitgestellt ist und die andere elektrische Verbindung durch eine gegenüberliegende Seitenwand des Gehäuses bereitgestellt ist.

17. Elektrochemische Vorrichtung nach Anspruch 14, wobei eine elektrische Verbindung über die Deckwand des Gehäuses bereitgestellt ist und die andere über den Boden des Gehäuses bereitgestellt ist.

18. Elektrochemische Vorrichtung nach einem der Ansprüche 15 bis 17, wobei mindestens eine elektrische Verbindung eine Lasche (58, 60) umfasst, die vom Inneren des Gehäuses nach außerhalb des Gehäuses verläuft, wobei die Lasche einen von einer Isolierung (54, 56) umgebenen Leiter (52C, 50C) umfasst.

19. Elektrochemische Vorrichtung nach einem der vorhergehenden Ansprüche, wenn abhängig von Anspruch 4, wobei die Vorrichtung zwei oder mehr Gehäuse umfasst, wobei die Gehäuse (10C1A, 10C1B, 10C1C; 10C2A, 10C2B, 10C2C; 10C3A, 10C3B, 10C3C) durch die erste mechanische Verbindung (20C) eines Gehäuses (10C1A; 10C2A; 10C3A), die mit einer zweiten mechanischen Verbindung (30A) eines benachbarten Gehäuses (10C1B; 10C2B; 10C3B) zusammenpasst, aufeinandergestapelt sind.

20. Elektrochemische Vorrichtung nach Anspruch 19, wobei das Zusammenpassen dadurch erzielt wird, dass die erste mechanische Verbindung einen Innendurchmesser oder eine innere Seite aufweist, der bzw. die durch den ersten Rand des ersten Teils definiert und nach einem Außendurchmesser oder einer äußeren Seite der zweiten mechanischen Verbindung ausgerichtet ist, der bzw. die durch den ersten Rand des dritten Teils definiert ist, oder umgekehrt.

21. Elektrochemische Vorrichtung nach Anspruch 19 oder 20, wobei das erste Teil (12C) des Gehäuses (10C2A) elektrisch isolierend ist, oder ferner eine elektrische Isolierung (64) zwischen dem ersten Teil (12C) des Gehäuses (10C2A) und dem dritten Teil (28) des benachbarten Gehäuses (10C2B) umfasst.

22. Elektrochemische Vorrichtung nach Anspruch 19 oder 21, wobei das erste Teil (12C) des Gehäuses (10C3A) in elektrischem Kontakt mit dem dritten Teil (28) des benachbarten Gehäuses (10C3B) steht und in jedem Gehäuse der zweite Rand des zweiten Teils von dem ersten Rand des dritten Teils galvanisch getrennt (68) ist und/oder der erste Rand des zweiten Teils von dem ersten Rand des ersten Teils galvanisch getrennt ist.

## Revendications

1. Dispositif électrochimique comprenant au moins une enceinte (10A ; 10B1 ; 10B2 ; 10B3 ; 10C1 ; 10C2 ; 10C3 ; 10D ; 10E) destinée à recevoir un empilement (24) de feuilles de matériau constitutif d'un dispositif électrochimique, comprenant au moins une feuille d'un premier type d'électrode, au moins une feuille d'un deuxième type d'électrode et au moins une feuille séparatrice entre les feuilles des deux types d'électrodes,
ladite enceinte comprenant plusieurs pièces comprenant une première pièce (12A ; 12B ; 12C) et une deuxième pièce (14A ; 14B ; 14C), lesdites pièces étant assemblées entre elles par soudage, ourlage, sertissage ou poinçonnage-sertissage pour constituer un volume intérieur (22A ; 22B) logeant ledit empilement,
ladite enceinte comprenant également un sommet (12AL ; 12BL ; 12DL ; 12EL) et un fond (14AB ; 14BB ; 28 ; 12DB ; 14EB) séparés par au moins une paroi latérale (14AW ; 12BW, 14BW ; 12DW, 14DW1, 14DW2, 14DW3 ; 12EW, 14EW1, 14EW2, 14EW3),
le dispositif électrochimique comprenant en outre au moins un élément de compression flexible (32A ; 32B1, 32B2) à l'extérieur d'au moins une paroi latérale ou chacun du sommet et du fond.

2. Dispositif électrochimique selon la revendication 1, dans lequel les première et deuxième pièces ont chacune un premier bord (12AE, 14AE ; 12BE, 14BE), où le premier bord (12AE ; 12BE) de la première pièce (12A ; 12B) est relié au premier bord (14AE ; 14BE) de la deuxième pièce (12A ; 14A) pour former une première connexion mécanique (20A ; 20B ; 20C).

3. Dispositif électrochimique selon la revendication 2, dans lequel le premier bord de la première pièce est plié autour du premier bord de la deuxième pièce ou inversement.

4. Dispositif électrochimique selon les revendications 2 ou 3, lesdites pièces comprenant en outre une troisième pièce (28) comprenant un premier bord, où la deuxième pièce comprend un deuxième bord et le premier bord de la troisième pièce est relié au deuxième bord de la deuxième pièce pour former une deuxième connexion mécanique (30A ; 30B).

5. Dispositif électrochimique selon la revendication 4, dans lequel le premier bord de la troisième pièce est plié autour du deuxième bord de la deuxième pièce ou inversement.

6. Dispositif électrochimique selon l'une quelconque des revendications précédentes, comprenant en outre l'empilement (24) dans le volume intérieur, lequel empilement est comprimé par une pression appliquée à travers le sommet et le fond ou une première paroi latérale et une autre paroi latérale opposée de l'enceinte.

7. Dispositif électrochimique selon l'une quelconque des revendications précédentes, dans lequel le sommet (12AL ; 12BL), le fond (14AB ; 14BB) et l'au moins une paroi latérale (14AW ; 12BW, 14BW) sont constitués d'un matériau métallique (16) et revêtus d'un matériau électriquement isolant (18) sur les surfaces du matériau métallique (16) faisant face au volume intérieur (ou de polymère).

8. Dispositif électrochimique selon l'une quelconque des revendications précédentes, dans lequel le fond (14BB) et/ou le sommet (12BL) sont ondulés.

9. Dispositif électrochimique selon l'une quelconque des revendications précédentes, comprenant en outre au moins un élément de prétension (34 ; 14BB), chaque élément de prétension étant pourvu à une extrémité de l'empilement (24) et faisant face à une feuille supérieure ou inférieure de l'empilement (24).

10. Dispositif électrochimique selon la revendication 9, dans lequel l'au moins un élément de prétension comprend un élément de prétension interne (34) dans le volume intérieur (22B) placé entre l'empilement (24) et le sommet (12BL) ou le fond (14BB) de l'enceinte.

11. Dispositif électrochimique selon les revendications 9 ou 10, dans lequel l'au moins un élément de prétension comprend un élément de prétension externe (14BB) pourvu en tant que sommet ou fond de l'enceinte.

12. Dispositif électrochimique selon l'une quelconque des revendications 9 à 11, dans lequel l'au moins un élément de prétension (34, 14BB) est concave avec un certain point focal, et l'élément de prétension (34 ; 14BB) est placé entre l'empilement (24) et le point focal.

13. Dispositif électrochimique selon l'une quelconque des revendications précédentes, comprenant en outre au moins un élément d'évent (62) au niveau du sommet, du fond ou d'au moins une paroi (14C).

14. Dispositif électrochimique selon l'une quelconque des revendications précédentes, comprenant en outre une première connexion électrique aux électrodes du premier type et une deuxième connexion électrique aux électrodes du deuxième type.

15. Dispositif électrochimique selon la revendication 14, lorsqu'elle dépend de la revendication 2, dans lequel les première et deuxième connexions électriques sont pourvues par l'intermédiaire de la première connexion mécanique (20A).

16. Dispositif électrochimique selon la revendication 14, dans lequel une connexion électrique est pourvue à travers une paroi latérale de l'enceinte et l'autre connexion électrique est pourvue à travers une paroi latérale opposée de l'enceinte.

17. Dispositif électrochimique selon la revendication 14, dans lequel une connexion électrique est pourvue par l'intermédiaire du sommet de l'enceinte et l'autre est pourvue par l'intermédiaire du fond de l'enceinte.

18. Dispositif électrochimique selon l'une quelconque des revendications 15 à 17, dans lequel au moins une connexion électrique comprend une patte (58, 60) s'étendant de l'intérieur de l'enceinte vers l'extérieur de l'enceinte, ladite patte comprenant un conducteur (52C, 50C) entouré par une isolation (54, 56).

19. Dispositif électrochimique selon l'une quelconque des revendications précédentes, lorsqu'elle dépend de la revendication 4, le dispositif comprenant deux enceintes, ou plus, lesquelles enceintes (10C1A, 10C1B, 10C1C ; 10C2A, 10C2B, 10C2C ; 10C3A, 10C3B, 10C3C)) sont empilés les unes sur les autres par la première connexion mécanique (20C) d'une enceinte (10C1A ; 10C2A ; 10C3A) s'accouplant avec une deuxième connexion mécanique (30A) d'une enceinte voisine (10C1B ; 10C2B ; 10C3B).

20. Dispositif électrochimique selon la revendication 19, dans lequel l'accouplement est réalisé par l'intermédiaire de la première connexion mécanique ayant un diamètre intérieur ou un côté défini par le premier bord de la première pièce qui est aligné avec un diamètre extérieur ou un côté de la deuxième connexion mécanique défini par le premier bord de la troisième pièce ou inversement.

21. Dispositif électrochimique selon les revendications 19 ou 20, dans lequel la première pièce (12C) de ladite enceinte (10C2A) est électriquement isolante ou comprend en outre une isolation électrique (64) entre la première pièce (12C) de ladite enceinte (10C2A) et la troisième pièce (28) de l'enceinte voisine (10C2B).

22. Dispositif électrochimique selon les revendications 19 ou 21, dans lequel la première pièce (12C) de ladite enceinte (10C3A) est en contact électrique avec la troisième pièce (28) de ladite enceinte voisine (10C3B) et, dans chaque enceinte, le deuxième bord de la deuxième pièce est électriquement isolé (68) du premier bord de la troisième pièce et/ou le premier bord de la deuxième pièce est électriquement isolé du premier bord de la première pièce.
